# EUROPEAN PATENT APPLICATION

(11) **EP 4 403 040 A1**
(43) Date of publication of application: **24.07.2024**
(21) Application number: 22869979.9
(22) Date of filing: 14.09.2022
(51) Int. Cl.: A23L 17/00

(54) **CRUSTACEAN-FLAVORED FISH PASTE PRODUCT AND METHOD FOR PRODUCING CRUSTACEAN-FLAVORED FISH PASTE PRODUCT**

(30) Priority: 14.09.2021 JP 2021149606
(71) Applicant: Murata Yutaka Shoten, Ltd., Shimonoseki-shi, Yamaguchi 759-6601 (JP); The National Research And Development Agency, Japan Fisheries Research and Education Agency, Yokohama-shi, Kanagawa 221-8529 (JP)
(72) Inventor: MURATA Kenjirou, Shimonoseki-shi, Yamaguchi 759-6601 (JP); USUI Masakatsu, Yokohama-shi, Kanagawa 221-8529 (JP); NAKADO Yuka, Yokohama-shi, Kanagawa 221-8529 (JP); ONZUKA Yuya, Yokohama-shi, Kanagawa 221-8529 (JP); KAWABE Shinya, Yokohama-shi, Kanagawa 221-8529 (JP); MIYASAKI Taiko, Yokohama-shi, Kanagawa 221-8529 (JP)
(74) Representative: Hasegawa, Kan
(86) International application number: PCT/JP2022/034312
(87) International publication number: WO 2023/042832

(57) **Abstract**

The purpose of the present invention is to provide a crustacean-flavored fish paste product which prevents burning without the addition of a crab extract or crab meat.

A crustacean-flavored fish paste product is produced which contains a compound obtained by mixing an amino acid with a disaccharide having a reducing sugar end to induce a Maillard reaction and is made mainly from minced fish. The product is characterized in that the compound is obtained through a step (a) of preparing amino acid-disaccharide-added minced fish to which at least two types of amino acids selected from methionine, glycine, and arginine, and a disaccharide having a reducing sugar end are added, and a step (b) of roasting a surface of the amino acid-disaccharide-added minced fish so that the surface reaches temperatures of 80-140 °C.

## Description

### TECHNICAL FIELD

The present invention relates to a crustacean-flavored fish paste product and a method of producing a crustacean-flavored fish paste product.

### BACKGROUND ART

Crustacean-flavored fish paste products, such as crab-flavored boiled fish paste, are important product categories of fish paste products with their annual production of over 300,000 tons worldwide estimated. Methods of producing crab-flavored boiled fish paste have main characteristics of flavoring by the addition of crab extract, crab meat, or the like, forming of fibrous fish meat, and coloring. When crab extract, crab meat, or the like is added to enhance the flavor of crab, specified ingredients should be labeled under the Food Labeling Law, and food will be considered unsuitable for consumption by consumers with crustacean allergies.

Under these circumstances, the development of flavor technology based on a Maillard reaction has been advanced. For example, it is disclosed that methionine, glycine, and arginine as amino acids can be mixed with lactose as sugars in certain amounts to produce casing boiled fish paste with a crustacean flavor (see Non-Patent Literature 1). Furthermore, a method of heating a mixture of crustacean or shellfish extract with amino acids and sugars at 100 °C for about 3 hours with predetermined pressure and steam, and then distilling it to prepare a flavor (Patent Literature 1), and a method of adding free amino acids and xylose or glucose to minced fish(surimi), and causing a Maillard reaction by drum heating with steam at 80-100 °C for 30-60 minutes to produce scallop adductor-like fibrous boiled fish paste having light brown color which is the original color of scallop adductor (see Patent Literature 2) are disclosed.

### CITATION LIST

### PATENT LITERATURE

PATENT LITERATURE 1: JP 2004-242547 A
PATENT LITERATURE 2: JP 2007-175054 A

### NON PATENT LITERATURE

NON PATENT LITERATURE 1: Akira Kubota et al., "Development of heat-dependent food flavorings and their application to fish paste products", the 51st Japan Society for Bioscience, Biotechnology, and Agrochemistry, Chugoku-Shikoku Branch, Abstracts, page 33

### SUMMARY OF INVENTION

### TECHNICAL PROBLEM

A so-called Maillard reaction, in which amino acids and sugars such as reducing sugars are heated, generates a unique aroma component, and the aroma varies depending on the type of amino acids and sugars used in the reaction, reaction conditions, and the like. Fish paste products such as tube-shaped fish paste (Chikuwa) and fried boiled fish paste utilize the Maillard reaction to generate melanoidin as a brown pigment to add color as well as flavor. However, the brown pigment is suddenly generated at a certain point during a heating process, which may result in an unintended burnt aroma. Against this background, it is extremely difficult that the Maillard reaction is used to develop a desired aroma to prepare a product. In addition, in the Maillard reaction, heating is generally performed under the condition that brown pigments are generated, and the development of the product preventing the generation of brown pigments and bringing out flavor is thus desired. Accordingly, an object of the present invention is to provide a crustacean-flavored fish paste product which prevents browning without the addition of crab extract or crab meat.

### SOLUTION TO PROBLEM

As a result of intensive studies to solve the problems described above, the present inventors completed the present invention by finding that minced fish to which two or three types of amino acids selected from methionine, glycine, and arginine, and maltose were added in predetermined amounts is prepared, and the surface of the resulting amino acid-disaccharide-added minced fish is roasted to reach temperature of 80-140 °C to produce a crustacean-flavored fish paste product that has a crustacean aroma and prevents a loss of flavor due to burning.

That is, the present invention is as follows.
[1] A crustacean-flavored fish paste product which contains a compound obtained by mixing an amino acid with a disaccharide having a reducing sugar end to induce a Maillard reaction and is made mainly from minced fish, the product characterized in that the compound is obtained through a step (a) of preparing amino acid-disaccharide-added minced fish to which at least two types of amino acids selected from methionine, glycine, and arginine, and a disaccharide having a reducing sugar end are add, and a step (b) of roasting a surface of the amino acid-disaccharide-added minced fish so that the surface reaches temperatures of 80-145 °C.
[2] The crustacean-flavored fish paste product according to the above [1] characterized in that the disaccharide having a reducing sugar end is maltose.
[3] The crustacean-flavored fish paste product according to the above [1], characterized in that in the step (b), the surface of the amino acid-disaccharide-added minced fish is roasted to reach temperatures of 100-140 °C.
[4] The crustacean-flavored fish paste product according to the above [1], characterized in that in the step (a), the prepared amino acid-disaccharide-added minced fish is formed into a sheet.
[5] The crustacean-flavored fish paste product according to the above [1], characterized in that a step (c) of steam-heating the minced fish roasted in the step (b) for about 15-30 minutes so that the center of the minced fish reaches temperatures of 85-90 °C is included.
[6] The crustacean-flavored fish paste product according to the above [1], characterized in that the amino acid added in the step (a) includes arginine, and a molar ratio of arginine to the disaccharide having a reducing sugar end is 1.3-5.
[7] The crustacean-flavored fish paste product according to the above [1], characterized in that the amino acid added in the step (a) includes methionine, and a molar ratio of methionine to the disaccharide having a reducing sugar end is 1/48-1/12.
[8] The crustacean-flavored fish paste product according to the above [1], characterized in that the amino acid added in the step (a) includes two types of amino acids, methionine and arginine.
[9] The crustacean-flavored fish paste product according to the above [1], characterized in that no crab extract or crab meat, or processed products thereof are added.
[10] A method of producing a crustacean-flavored fish paste product which contains a compound obtained by mixing an amino acid with a disaccharide having a reducing sugar end to induce a Maillard reaction and is made mainly from minced fish, the method comprising a step (a) of preparing amino acid-disaccharide-added minced fish to which at least two types of amino acids selected from methionine, glycine, and arginine, and a disaccharide having a reducing sugar end are added, and a step (b) of roasting a surface of the amino acid-disaccharide-added minced fish so that the surface reaches temperatures of 80-140 °C.
[11] The method of producing a crustacean-flavored fish paste product according to the above [10], characterized in that the disaccharide having a reducing sugar end is maltose.
[12] The method of producing a crustacean-flavored fish paste product according to the above [10], characterized in that in the step (b), the surface of the amino acid-disaccharide-added minced fish is roasted to reach temperatures of 100-145 °C.
[13] The method of producing a crustacean-flavored fish paste product according to the above [10], characterized in that in the step (a), the prepared amino acid-disaccharide-added minced fish is formed into a sheet.
[14] The method of producing a crustacean-flavored fish paste product according to the above [13], characterized in that in the step (b), the amino acid-disaccharide-added minced fish formed into a sheet is placed on a belt conveyor, and while the belt conveyor is moved, the surface of the minced fish is roasted to reach temperatures of 80-140 °C.
[15] The method of producing a crustacean-flavored fish paste product according to the above [14], characterized in that in the step (b), the amino acid-disaccharide-added minced fish formed into a sheet with a thickness of 1.5-3.0 mm is placed on a belt conveyor, and while the belt conveyor is moved, the surface of the minced fish is roasted for 50-100 seconds after reaching a temperature of over 100 °C.
[16] The method of producing a crustacean-flavored fish paste product according to the above [10], characterized by comprising a step (c) of steam-heating the minced fish roasted in the step (b) for about 15-30 minutes so that the center of the minced fish reaches temperatures of 85-90 °C.
[17] The method of producing a crustacean-flavored fish paste product according to the above [10], characterized in that the amino acid added in the step (a) includes arginine, and a molar ratio of arginine to the disaccharide having a reducing sugar end is 1.3-5.
[18] The method of producing a crustacean-flavored fish paste product according to the above [10], characterized in that the amino acid added in the step (a) includes methionine, and a molar ratio of methionine to the disaccharide having a reducing sugar end is 1/48-1/12.
[19] The method of producing a crustacean-flavored fish paste product according to the above [10], characterized in that the amino acid added in the step (a) includes two types of amino acids, methionine and arginine.
[20] The method of producing a crustacean-flavored fish paste product according to the above [10], characterized in that no crab extract or crab meat, or processed products thereof are added.

### ADVANTAGEOUS EFFECTS OF INVENTION

A crustacean-flavored fish paste product according to the present invention has crustacean flavor, particularly crab flavor, without the addition of crab extract or crab meat. Accordingly, the crustacean-flavored fish paste product containing no crab extract or crab meat can be produced, and even consumers with crustacean allergies can safely eat the product. Furthermore, maltose can be used as a disaccharide having a reducing sugar end to produce the crustacean-flavored fish paste product that even those with lactose intolerance can safely eat.

### BRIEF DESCRIPTION OF DRAWINGS

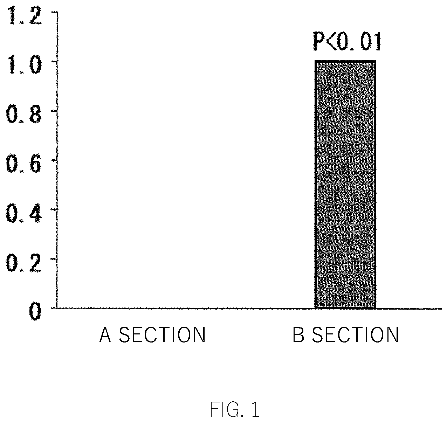

[FIG. 1] FIG. 1 is a diagram showing the result of a sensory test of the crab-flavored fish paste product produced in Example 2. In the figure, the vertical axis is an average score.

### DESCRIPTION OF EMBODIMENTS

A crustacean-flavored fish paste product according to the present invention contains a compound obtained by mixing an amino acid with a disaccharide having a reducing sugar end (reducing-end carbonyl groups in sugar) to induce a Maillard reaction and is made mainly from minced fish. The crustacean-flavored fish paste product is characterized in that the compound is obtained through a step (a) of preparing amino acid-disaccharide-added minced fish to which at least two types of amino acids selected from methionine, glycine, and arginine, and a disaccharide having a reducing sugar end are add, and a step (b) of roasting a surface of the amino acid-disaccharide-added minced fish so that the surface reaches temperatures of 80-140 °C, and is hereinafter also referred to as "this crustacean-flavored fish paste product".

A method of producing a crustacean-flavored fish paste product according to the present invention which contains a compound obtained by mixing an amino acid with a disaccharide having a reducing sugar end to induce a Maillard reaction and is made mainly from minced fish, is characterized by including a step (a) of preparing amino acid-disaccharide-added minced fish to which at least two types of amino acids selected from methionine, glycine, and arginine, and a disaccharide having a reducing sugar end are added, and a step (b) of roasting a surface of the amino acid-disaccharide-added minced fish so that the surface reaches temperatures of 80-140 °C, and is hereinafter also referred to as "this method of producing a crustacean-flavored fish paste product". In addition, "at least two types of amino acids selected from methionine, glycine, and arginine, and a disaccharide having a reducing sugar end" added to minced fish is hereinafter also referred to as "amino acid-disaccharide mixed crustacean-flavored seasoning". "This crustacean-flavored fish paste product" and "this method of producing a crustacean-flavored fish paste product" will be described in detail below.

### (Amino acid)

In this specification, the amino acids added to minced fish in step (a) in order to induce the Maillard reaction may contain at least two types of amino acids selected from methionine, glycine, and arginine, and may contain at least two types of amino acids: methionine and arginine; methionine and glycine; or glycine and arginine, or may contain three types of amino acids, methionine, glycine, and arginine. In addition, the amino acids may be D- or L-amino acids, or racemic amino acids thereof. Furthermore, the amino acids added to the minced fish may be commercially available, or the amino acids biosynthesized using known biochemical techniques and purified as necessary may be used. The added amino acids may be in powder or liquid form, but the amino acids sold as food additives may be preferably used. Additionally, one or more of the amino acids other than methionine, glycine, and arginine, specifically, alanine, asparagine, aspartic acid, cysteine, glutamine, glutamic acid, histidine, isoleucine, leucine, lysine, phenylalanine, proline, serine, threonine, tryptophan, tyrosine, and valine, and salts thereof may be added, but in order to maintain crustacean flavor, the total amount of the added amino acids other than methionine, glycine, and arginine to the disaccharide having a reducing sugar end is 100 % by weight or less, preferably 50 % by weight or less, more preferably 30 % by weight or less, even more preferably 10 % by weight or less, most preferably 5 % by weight or less, particularly preferably 2 % by weight or less, especially 1 % by weight or less.

In this specification, the term "Maillard reaction" refers to a series of reactions up to the generation of brown pigments (melanoidins) by heating amino acids and sugars such as reducing sugars, as well as other routes such as Strecker degradation which occurs by branching from reaction intermediates. That is, it includes the early stage of the Maillard reaction in which Amadori rearrangement products are produced via Schiff bases from sugars, the middle stage in which aroma components such as pyrazine and furan and highly reactive intermediates such as α-dicarbonyl compounds are produced, and the late or final stages in which α-dicarbonyl compounds or the like react with new amino compounds. In addition, the phrase "inducing the Maillard reaction" means enhancing the Maillard reaction. Furthermore, the compounds obtained by inducing the Maillard reaction mean the compounds generated during the process of the Maillard reaction, and include not only melanoidins but also aromatic compounds such as furans, pyrazines, and aldehydes that are generated at each stage or molecular route.

The total amount of at least two types of amino acids selected from methionine, glycine, and arginine added to minced fish is not particularly limited, but can be 0.3-4.0 % by weight based on minced fish, and the lower limit may be 0.8 % by weight, 1.0 % by weight, or 1.2 % by weight, and the upper limit may be 3.0 % by weight, 2.5 % by weight, or 2.0 % by weight.

### (Disaccharide with reducing sugar end)

In the present specification, the added disaccharide having a reducing sugar end is not particularly limited as long as it undergoes a Maillard reaction with methionine, glycine, or arginine, in other words, it has reducing properties, and can include maltose, lactose, cellobiose, lactulose, or the like. The maltose may be preferably used from the viewpoint that even those with lactose intolerance can eat the product safely.

The amount of the disaccharide with a reducing sugar end when added to minced fish is not particularly limited, but can be 0.1-1.5 % by weight based on minced fish, and the lower limit may be 0.2 % by weight, 0.3 % by weight, 0.4 % by weight, or 0.45 % by weight, and the upper limit may be 1.2 % by weight, 1.0 % by weight, 0.8 % by weight, 0.7 % by weight, or 0.6 % by weight. The disaccharide having a reducing sugar end described above may be added to minced fish, but in order to prevent browning due to the Maillard reaction, sugars other than the disaccharide having a reducing sugar end, specifically xylose, glucose, ribose, or the like may be added, and the additive amount thereof may be 0.1 % by weight or less, preferably 0.05 % by weight or less, more preferably 0.03 % by weight or less, even more preferably 0.01 % by weight or less, and most preferably 0 % by weight based on minced fish. It should be noted that the amount of the disaccharide having a reducing sugar end includes no disaccharides contained in minced fish itself.

In the step (a), when arginine is added to minced fish, the molar ratio of the added arginine to the added disaccharide having a reducing sugar end is not particularly limited, but can be 1.3-5, and the lower limit may be 1.4, 1.6, 1.8, or 2, and the upper limit may be 4, 3.7, 3.5, 3.3, or 3. In this specification, "-" means a range that includes the numerical values described before and after it as the minimum and maximum values, respectively.

In the step (a), when methionine is added to minced fish, the molar ratio of the added methionine to the added disaccharide having a reducing sugar end is not particularly limited, but can be 1/48-1/12, and the lower limit may be 1/44, 1/40, 1/38, or 1/36 and the upper limit may be 1/16, 1/20, 1/24, 1/28, or 1/32.

In the step (a), when glycine is added to minced fish, the molar ratio of the added glycine to the added disaccharide having a reducing sugar end is not particularly limited, but can be 0.4-6, and the lower limit may be 0.6, 0.8, or 1.0 and the upper limit may be 5, 4, or 3.4.

In the step (a), when methionine and glycine are added to minced fish, the molar ratio of the added methionine to the added glycine is not particularly limited, but can be 1/288-1/6, and the lower limit may be 1/96, 1/72, or 1/36 and the upper limit may be 1/12, 1/20, 1/24, or 1/28.

In the step (a), when methionine and arginine are added to minced fish, the molar ratio of the added methionine to the added arginine is not particularly limited, but can be 1/240-1/6, and the lower limit may be 1/120, 1/96, or 1/72 and the upper limit may be 1/10, 1/24, or 1/32.

In the step (a), when glycine and arginine are added to minced fish, the molar ratio of the added glycine to the added arginine is not particularly limited, but can be 1/12-6, and the lower limit may be 1/8, 1/4, or 1/2.5 and the upper limit may be 4, 3, or 2.

In the step (a), when methionine, arginine, and maltose are added to minced fish, the molar ratio of the added methionine or arginine to the added maltose is not particularly limited, but the molar ratio of the added methionine to the added maltose can be 1/48-1/12, preferably 1/36-1/24, and the molar ratio of the added arginine to the added maltose can be 1.3-5, preferably 2-3.

In the step (a), when methionine, glycine, arginine, and maltose are added to minced fish, the molar ratio of the added methionine, glycine, or arginine to the added maltose is not particularly limited, but the molar ratio of the added methionine to the added maltose can be 1/48-1/12, preferably 1/32-1/24, the molar ratio of the added glycine to the added maltose can be 0.4-6, preferably 1-3, and the molar ratio of the added arginine to the added maltose can be 1.3-5, preferably 2-3.

### (Fish meat and seasonings)

As fish meat for minced fish in this specification, fish meat generally used as a raw material for fish paste products can be used, and includes white meat fish such as fish belonging to Gadiformes such as Walleye Pollack, Hake (Pacific whiting/Platinum cod), blue whiting (Northern cod), Southern blue whiting, and Hoki, Aulopiformes such as lizardfish, Beryciformes such as Splendid alfonsino, Scorpaeniformes such as Atka mackerel, and Perciformes such as red sea bream, red bigeye, golden threadfin bream, and white croaker, and can preferably include fish belonging to Gadiformes, preferably Walleye Pollack from the viewpoint of having less fishy odor and bringing out crustacean flavor. Furthermore, two or more kinds of the fish meat described above may be combined, preferably containing fish belonging to Gadiformes, and the content of fish belonging to Gadiformes is preferably 25 % or more, 50 % or more, 80 % or more, or 90 % or more. Additionally, the minced fish to which sugar alcohol such as sorbitol, phosphates, and the like are added may also be used.

The amount of amino acid-disaccharide mixed crustacean-flavored seasoning added to minced fish is not particularly limited, but can be 1.0-5.0 % by weight based on minced fish, and the lower limit may be 1.2 % by weight, 1.4 % by weight, or 1.5 % by weight and the upper limit may be 4.0 % by weight, 3.5 % by weight, or 3.2 % by weight. Furthermore, the amino acids and the disaccharide having a reducing sugar end may be added to minced fish at the same time, or may be added stepwise in any order. In addition, salt of 0.5-4 % by weight, preferably 1.0-3 % by weight is preferably added to the minced fish for salt-grinding for about 5-20 minutes to add the amino acid-disaccharide mixed crustacean flavor seasoning to the salt-ground minced fish.

When the amino acid-disaccharide mixed crustacean-flavored seasoning is added to minced fish, seasonings such as starch, sugar, sweet sake, and monosodium glutamate as well as egg whites, soy protein, edible oil, preservatives, flavorings, coloring agents, and the like may be added as an auxiliary material. It should be noted that glycine, which is added to fish paste products for bacteriostatic action and sweetening purposes, is considered herein as an "amino acid added to minced fish."

Examples of starch can include potato starch, rice starch, tapioca starch, corn starch, and processed starch thereof. Examples of the processed starch can include etherified starch, esterified starch, and crosslinked starch. The amount of starch added to minced fish is not particularly limited, but can be 0-8.0 % by weight based on minced fish, and the lower limit may be 0.1 % by weight, 0.2 % by weight, 0.5 % by weight, 0.8 % by weight, or 1.0 % by weight, and the upper limit may be 6.0 % by weight, 5.0 % by weight, 4.0 % by weight, 3.0 % by weight, 2.0 % by weight, or 1.5 % by weight. Controlling the starch content, particularly to 2.0 % by weight or less can prevent browning due to the Maillard reaction during long-term storage and improve the crustacean flavor. Furthermore, water of 0-70 % by weight can be added to minced fish based on the water content of minced fish at the same time as or before or after adding the amino acid-disaccharide mixed crustacean-flavored seasoning to minced fish.

As for mixture of amino acids, maltose, and starch added to minced fish, for example, when methionine, arginine, and maltose are added to minced fish in the step (a), the molar ratio of the added methionine to the added maltose is 1/48-1/12, preferably 1/32-1/24, the molar ratio of the added arginine to the added maltose is 1.3-5, preferably 2-3, and starch of 0-5.0 % by weight, preferably 0-2 % by weight, and more preferably 0 % by weight can be added to minced fish.

In addition, in the step (a), when methionine, glycine, arginine, and maltose are added to minced fish, the molar ratio of the added methionine to the added maltose is 1/48-1/12, preferably 1/32-1/24, the molar ratio of the added glycine to the added maltose is 0.4-6, preferably 1-3, the molar ratio of the added arginine to the added maltose is 1.3-5, preferably 2-3, and starch of 0-5.0 % by weight, preferably 0-2 % by weight, and more preferably 0 % by weight can be added to minced fish.

The minced fish to which the amino acid-disaccharide mixed crustacean-flavored seasoning and the like has been added can be grinded with a grinding machine or the like to mix the amino acid-disaccharide mixed crustacean-flavored seasoning with the minced fish.

In the step (a), the minced fish to which the amino acid-disaccharide mixed crustacean-flavored seasoning has been added may be formed into a sheet by extruding it into a strip from a predetermined nozzle or rolling a predetermined amount of the minced fish with a rolling mill, or by other methods. The thickness of the sheet may be 1.0-20 mm, preferably 1.2-15 mm, more preferably 1.3-3 mm, and even more preferably 1.5-2.2 mm. The thickness described above can cause the Maillard reaction not only on the surface but also at the center.

Additionally, the sheet-shaped minced fish may be rolled up into a rod shape, the surface of the minced fish rolled up into a rod shape may be next partially or fully colored with a coloring agent, and the colored minced fish may be then cut into appropriate lengths. Examples of coloring agents can include red yeast rice pigment, annatto pigment, tomato pigment, cochineal pigment, and paprika pigment.

### (Roasting)

In the step (b), the surface of the minced fish is roasted. The roasting temperature can be adjusted as appropriate depending on the temperature of the minced fish before roasting and the roasting time. The surface of the minced fish preferably reaches temperatures of 80-140 °C, and the lower limit can be 90 °C, 100 °C, and 110 °C and the upper limit can be 135 °C, 130 °C, 125 °C, and 120 °C. Additionally, the temperature described above may be an average temperature during roasting, and does not exclude an aspect in which roasting is temporarily performed at a temperature outside the range described above. Furthermore, the surface temperature of the minced fish can be measured with a radiation thermometer or the like.

The roasting time can be adjusted as appropriate depending on the roasting temperature described above, the size, weight, and shape of minced fish, or the thickness of the sheet when the minced fish is in the form of a sheet, but is preferably 20 seconds-30 minutes. The lower limit can be 30 seconds, 45 seconds, 55 seconds, and 60 seconds, and the upper limit can be 20 minutes, 15 minutes, 10 minutes, 8 minutes, 7 minutes, 6 minutes, 5 minutes, 4 minutes, 3 minutes, and 90 seconds. The roasting at the temperature and time as described above significantly enhances the Maillard reaction. However, the Maillard reaction also occurs and progresses through heating steps other than the roasting described above, and all compounds obtained by inducing the Maillard reaction are not intended to be generated only by roasting. It should be noted that the roasting at the temperature and time described above not only generates a compound having a crustacean flavor obtained by inducing the Maillard reaction, but also prevents the browning characteristic of the Maillard reaction.

In addition, the roasting time can be 50-100 seconds after the surface temperature described above exceeds 100 °C, specifically, when the sheet-shaped minced fish, for example, in the form of a sheet having a thickness of 1.5-3.0 mm, preferably 1.8-2.2 mm is roasted. The lower limit can be 60 seconds or 64 seconds, and the upper limit can be 95 seconds, 90 seconds, or 80 seconds.

Further, after the step (b), it is preferable to perform a step (c) of steam-heating the minced fish roasted in the step (b) for about 15-30 minutes so that the center thereof reaches temperatures of 85-90 °C. The purpose of the roasting in the step (b) is to generate a compound obtained by inducing the Maillard reaction on the surface of the minced fish, and the whole minced fish, especially the center thereof may not be heated. Heating the center of the minced fish, if necessary, can be performed by the subsequent steam-heating step or the like. When the roasting temperature and time described above exceeds, the center of the minced fish is also likely to be heated, but brown pigments are likely to be generated on the surface of the minced fish. Accordingly, the two-step process of the roasting step (b) and the steam-heating step (c) can produce a fish paste product that has flavor at the roasted surface and contains a compound obtained by inducing the Maillard reaction while preventing browning, and is heated even at the center.

After the step (c), as a step (d), the steam-heated minced fish can be cooled at 8-10 °C for about 30-60 minutes, and then vacuum-packed followed by steam-heating at 95-98 °C for about 10-30 minutes. The steam-heating after vacuum-packaging can not only sterilize the minced fish, but also further improve the crustacean flavor.

The compound obtained by inducing the Maillard reaction in the step (b) should be partially contained in this crustacean-flavored fish paste product. It may be contained only at the surface of this crustacean-flavored fish paste product or inside the product.

Heat sources for roasting include far-infrared heaters, near-infrared heaters, infrared burners, and gas burners, and a method of roasting includes heating the surface of the minced fish directly or indirectly with the heat source described above. It should be noted that the roasting does not include steam-heating at normal pressure. In the step (b), the amino acid-disaccharide-added minced fish formed into a sheet can be placed on a belt conveyor, and while the belt conveyor is moved, the surface of the minced fish can be roasted to reach temperatures of 80-140 °C. When roasting is performed with the heat source, only one surface or both surfaces of the minced fish may be roasted, and the both surfaces may be preferably roasted from the viewpoint of improving yield.

It should be noted that the steps described in the steps (a) and (b), in which the amino acid-disaccharide-added minced fish is prepared under predetermined conditions and roasted to induce the Maillard reaction, are extremely complicated. Accordingly, it is technically impossible to analyze all the structures of the compound obtained by inducing the Maillard reaction, obtained through the steps (a) and (b), or it requires significantly excessive economic expenditure and time to define the structures. Therefore, in the statement that "the compound obtained by inducing the Maillard reaction is obtained through the step (a) and step (b)" in the description of this crustacean-flavored fish paste product, the so-called "impossible or impractical circumstances" exist.

### (Crustacea and Crustacea Extract)

The crustaceans described in this application can include crabs, shrimps, mantis shrimps, mysid shrimps, krill, and goose barnacle, preferably crabs, and more preferably snow crabs. In addition, the paste products in this specification can include steamed fish paste (Kamaboko), fried boiled fish paste, flavored boiled fish paste, tube-shaped fish paste (Chikuwa), and minced and steamed fish paste (Hanpen).

This crustacean-flavored fish paste product preferably includes no crustacean extracts, crustacean meats, or processed products of crustaceans or crustacean meats such as crab extracts, crab meats, or processed products of crab extracts or crab meats, shrimps, shrimp meats, or processed products of shrimps or shrimp meats from the viewpoint that even consumers with crustacean allergies can safely eat. The processed products of crustaceans or crustacean meats can include extracts, crushed products, dry powders, and cooked products of crustaceans or crustacean meats.

### (Method of producing crustacean-flavored fish paste product)

This method of producing the crustacean-flavored fish paste product is not particularly limited as long as it includes the steps (a) and (b), and may optionally include a steam-heating step, a cooling step, a sterilization step and a packaging step after the roasting step. Hereinafter, a series of steps of producing crab-flavored boiled fish paste, commonly known as crab sticks will be outlined as an example.

The minced fish is salt-ground, and optionally, water, seasoning or the like is then added to the salt-ground minced fish with the amino acid-disaccharide mixed crustacean-flavored seasoning for stirring to form a paste-like minced fish. Next, the paste-like minced fish is formed into a sheet.

The minced fish formed into a sheet is placed on a conveyor belt, and while the conveyor belt is moved to convey the minced fish, the surface of the minced fish is roasted with an infrared burner to reach temperatures of 80-140 °C.

The roasted sheet-shaped minced fish is rolled up into a rod shape, the surface thereof is next partially or fully colored, and the colored minced fish is then cut into appropriate lengths. The minced fish rolled up into a rod shape is subsequently steam-heated for about 15-30 minutes to reach temperatures of 85-90 °C at the center. Next, the stem-heated minced fish is cooled at temperatures of 8-10 °C for about 30-60 minutes, vacuum packed, and then steam-heated at temperatures of 95-98 °C for about 10-30 minutes for sterilization.

Hereinafter, the present invention will be explained in more detail with reference to examples, but the technical scope of the present invention is not limited to these examples.

### [Example 1]

In order to prepare a fish paste product with a crustacean flavor that has enhanced fragrance and roasted aroma due to induction of the Maillard reaction, the mixture ratios of amino acids and disaccharides having a reducing sugar end were first examined. The developed aroma was assessed by trained panelists with the following method.

An aluminum cup was placed on a frying pan, and the frying pan was heated at 200 °C. Next, a mixture of "amino acids" and "a disaccharide with a reducing sugar end" to be evaluated for aromas was placed in the aluminum cup and heated. The evaluation of the aroma was started when the mixture was placed in the aluminum cup and ended when the mixture started to brown.

The Non-Patent Literature 1 describes that a crustacean aroma is generated by inducing a Maillard reaction with a mixture ratio of methionine: glycine: arginine: lactose = 1/64 : 1 : 1 : 1. However, lactose develops a unique sweet taste and aroma, and can thus reproduce the "crustacean flavor", but lactose is an element that should be removed as much as possible. In addition, lactose may cause various symptoms associated with lactose intolerance, making it difficult or inappropriate for consumers with this disease to consume it. Furthermore, lactose is high risk food that should be avoided for consumers with milk allergies. Accordingly, raw materials and mixture that can reproduce the crustacean flavor in the fish paste product without lactose were examined.

### (Mixture example 1: Changed lactose to maltose/No change in mixture ratio)

A mixed composition of amino acids and a disaccharide having a reducing sugar end with a mixture ratio (molar ratio, the same in the following mixture ratios) of methionine : glycine : arginine : maltose = 1/64 : 1 : 1 : 1 was used to evaluate an aroma with the method described above. As a result, compared to the case where the mixture ratio of methionine : glycine : arginine : lactose = 1/64 : 1 : 1 : 1 is used, the aroma was slow to develop and the aroma was weak. Furthermore, the developed aroma was reminiscent of a faint burnt soy sauce.

### (Mixture example 2: Double the amount of maltose)

In order to promote Maillard reaction, the ratio of maltose having a reducing sugar end was doubled, that is, the mixture ratio of methionine : glycine : arginine : maltose = 1/64 : 1 : 1 : 2 was used to evaluate an aroma with the method described above. As a result, compared to the mixture example 1, the aroma reminiscent of shrimp crackers was slightly stronger, but at the same time, the aroma of fried noodles was also smelled. Furthermore, the roasted aroma (fragrance) was lacking.

### (Mixture example 3: Glucose instead of maltose)

In order to promote the Maillard reaction, maltose as a disaccharide having a reducing sugar end was changed to glucose as a monosaccharide with a lower molecular weight, that is, a mixture ratio of methionine : glycine : arginine : glucose = 1/64 : 1 : 1 : 1 was used to evaluate an aroma with the method described above. As a result, the aroma was weak compared to any of the mixture ratios described above. Additionally, the time to carbonize (burn) was short and difficult to be controlled.

### (Summary 1)

As described above, it has been shown that increasing or decreasing a reducing sugar, or lowering the molecular weight is not effective in increasing the efficiency of the generation of a shrimp cracker-like aroma.

### (Mixture examples 4-1 to 4-3: Change of mixture ratio of methionine)

Methionine was assumed to have the most influence on the strength and type of an aroma, and the mixture ratio of methionine was varied as follows to evaluate an aroma with the method described above.
(Mixture example 4-1) Methionine: Glycine: Arginine: Maltose = 1/8 : 1 : 1 : 1
(Mixture example 4-2) Methionine: Glycine: Arginine: Maltose = 1/16 : 1 : 1 : 1
(Mixture example 4-3) Methionine: Glycine: Arginine: Maltose = 1/32 : 1 : 1 : 1

The mixture example 4-1 had a strong dried shiitake-like aroma unique to methionine. The mixture example 4-2 had a dried shiitake-like aroma unique to methionine, and also had a burnt soy sauce-like aroma. The mixture example 4-3 had a dried shiitake-like aroma unique to methionine in the first half of roasting, but the aroma decreased in the second half. In addition, the burnt soy sauce-like aroma and roasted aroma were also maintained.

### (Summary 2)

It has been shown that excessively increasing the amount of methionine was not suitable, but moderately increasing the amount may improve the efficiency of generating the roasted aroma.

### (Mixture ratio 5-1-1 to 5-3-3: Aroma developed by each of methionine, glycine, and arginine)

In order to examine how the aroma developed by each of methionine, glycine, and arginine is changed when lactose is changed to maltose, the mixture ratio was varied as follows to evaluate an aroma with the method described above.

(Mixture 5-1-1) Methionine : Lactose = 1 : 1
(Mixture 5-1-2) Methionine : Maltose = 1 : 1

The mixture 5-1-1 had strong shiitake, rush, and soy sauce or simmered chicken and vegetables (Chikuzenni)-like aromas in order as the roasting progressed, and the mixture 5-1-2 had shiitake, rush, food boiled in soy sauce (Tsukudani), and soy sauce-like aromas in order as the roasting progressed. Accordingly, changing lactose to maltose was considered to have not so much effect on the aroma developed by methionine.

(Mixture 5-2-1) Glycine : Lactose = 1 : 1
(Mixture 5-2-2) Glycine : Maltose = 1 : 1

The mixture 5-2-1 had the strong fragrance with aromas of cotton candy, caramel, and toast in order as the roasting progressed. The mixture 5-2-2 had no odors and then had the aromas of cotton candy and caramel in order as the roasting progressed, and the cotton candy-like aroma lasts. Accordingly, changing lactose to maltose was considered to have not so much effect on the aroma developed by glycine.

(Mixture 5-3-1) Arginine : Lactose = 1 : 1
(Mixture 5-3-2) Arginine : Maltose = 1 : 1

The mixture 5-3-1 had a strong roasted aroma with corn-like and burnt grain or cookie aromas in order as the roasting progressed, and the mixture 5-3-2 had a fried noodle-like aroma as the roasting progressed and had the reduced roasted aroma compared to the mixture 5-3-1. Accordingly, the change in aroma due to the change from lactose to maltose was relatively significant. Therefore, the mixture ratio of arginine was doubled and reexamined.

### (Mixture 5-3-3) Arginine : Maltose = 2 : 1

The mixture 5-3-3 had an enhanced roasted aroma and had the same aroma as the mixture 5-3-1.

### (Summary 3)

It has been shown that the change from lactose to maltose had the most effect on the development of aroma caused by arginine. The reduced aroma can be probably compensated to some extent by increasing the mixture ratio of arginine.

Based on the findings in Summaries 1 to 3, a mixture with a mixture ratio of methionine : maltose = 1/32 : 1 and arginine : maltose = 2 : 1 was prepared to evaluate an aroma in the same manner as described above. As a result, as the roasting progressed, a roasted aroma with burnt soy sauce-like and shrimp cracker-like aromas in order was sufficiently developed. In the examples 2 and 3 described below, with the mixture ratio of methionine : maltose = 1/32 : 1 and arginine : maltose = 2 : 1, a crustacean flavor seasoning to which glycine was further added was used. A mixture of maltose and glucose instead of maltose was examined, but any effective conditions for a crustacean flavored seasoning cannot be found.

### [Example 2]

A crab-flavored fish paste product was produced using the crab-flavored seasoning prepared at the mixture ratio examined in Example 1, and was subjected to a sensory test with the following three sections. Section NC1: Seasoned minced fish only (negative control)
Section A: Seasoned minced fish only
Section B: Added crustacean-flavored seasoning of 2 % by weight based on seasoned minced fish

Frozen minced fish (Walleye Pollack: containing sugar of 4.7 %, sorbitol of 2 %, and phosphate of 0.2 %: produced in Hokkaido) was coarsely ground with a silent cutter, and salt of 2.3 % based on the minced fish was added for salt-grinding. When fish fiber became fine, water of 50 % based on the minced fish was added to prepare a paste-like seasoned minced fish. The crustacean-flavored seasoning described in Example 1 was added to the resulting seasoned minced fish (no addition was made in Section NC1). It should be noted that starch was not added.

Next, the seasoned minced fish was formed into a sheet with a thickness of 2 mm and a width of 125 mm, and the surface thereof was roasted at 100-130 °C over an open flame for about 90 seconds with an infrared burner (Rinnai Corporation).

The baked seasoned minced fish sheet is left to cool, shredded into 1mm wide pieces with a noodle making machine, and rolled into a stick shape. Then, a coloring agent (red yeast rice pigment: water = 1 : 2) is applied to the upper surface of the minced fish sheet, and the seasoned minced fish sheet rolled into a stick shape was steam-heated for 20-25 minutes to reach a temperature of 85 °C at the center. Next, it was cooled for 30 minutes with an air cooler at 8 °C, cut into 40 mm pieces, vacuum packaged, and then sterilized by steam-heating (98 °C, 13 minutes × 2) to produce a crab-flavored fish paste product.

The produced crab-flavored fish paste product was subjected to a sensory test. The test was performed by 11 trained panelists in a blinded method. First, all panelists ate a product from Section NC1 and had it recognized as a reference crab-like aroma. Next, the panelists ate respective products from Section A and Section B while they did not know whether each of the products is Section A or Section B, and evaluated the intensity of the crab-like aroma when compared to Section NC1. The average value of the scores for each section was determined with a score of 1 when the product smells the strong crab-like aroma compared to the section NC1, and a score of 0 when the product smells the crab-like aroma not different compared to the section NC1. A significant difference test for the evaluation result was performed by a paired t-test.

The result is shown in FIG. 1. The vertical axis represents an average score. As shown in FIG. 1, no panelists evaluated that the section A smelled a strong crab-like aroma compared to the section NC1, and 11 panelists evaluated that the section B smelled a strong crab-like aroma compared to the section NC 1. In addition, the result of the paired t-test confirmed that there was a difference in the average values at a significance level of 1 %. Further, the section B smelled a strong crab-like aroma, as well as the sweetness derived from lactose had also disappeared. In addition, the crab-flavored fish paste product showed no visible browning generated by the Maillard reaction, and only slight change in color of the minced fish. In the produced crab-flavored fish paste product described above, the sheet-shaped fish paste product was roasted to initiate and promote the Maillard reaction, and the compound with a crustacean flavor obtained by inducing a Maillard reaction is generated at least on the surface. It is likely that the sheet-shaped fish paste product after roasting is rolled into a rod shape, so that the compound obtained by inducing the Maillard reaction is arranged in a spiral shape from the center to the outside, thereby preserving the crustacean flavor in the product. Additionally, when the section B was sealed and packed, and stored at 4 °C for 2 weeks, the crab-like aroma was almost maintained.

### [Example 3]

One of the characteristics of the present invention is to obtain a compound obtained by roasting the minced fish formed into a sheet to induce a Maillard reaction. Generally, the Maillard reaction generates melanoidin which is a browning substance, and as the reaction progresses, burning occurs. In crab-flavored fish paste products, browning and burning may be factors that impair the crab flavor. Accordingly, heating conditions for forming a crustacean flavor under the condition for inducing the Maillard reaction and for generating no burning were examined. A crab-flavored fish paste product was produced by the following steps, and the temperature during the steps was measured.

### <Step 1>

A stripping sheet was spread on a stainless-steel plate, and the seasoned minced fish prepared in Example 2 was formed into a sheet with a thickness of 2 mm and a width of 125 mm on the stripping sheet.

### <Step 2>

After the surface temperature of the sheet-shaped seasoned minced fish was measured, the seasoned minced fish was roasted with an infrared burner (Rinnai Corporation). During roasting, the surface temperature of the seasoned minced fish was measured at any time with an infrared thermometer (IR-302: Custom Corporation), and the state of thermal denaturation on the surface of the seasoned minced fish, the degree of roasting, the occurrence of burning on the surface, and the like were observed. In addition, the time from when the surface temperature of the seasoned minced fish exceeded 100 °C until the end of heating was measured.

As sections, sections NC2, NC3, NC4, C, D, E, F, G, and H were prepared. The section NC2 is a release sheet placed on an iron plate without seasoned minced fish (control without seasoned minced fish), and NC3 and 4 are sheet-shaped seasoned minced fish steam-heated (85 °C, 20 minutes) without roasting (control without roasting). Further, the sections C to H are sheet-shaped seasoned minced fish roasted with an infrared heater over an open flame and then steam-heated (85 °C, 20 minutes). The result is shown in Table 1. In NC2, the surface temperature of the iron plate was measured instead of the temperature of the seasoned minced fish. Crab flavor was evaluated by four trained panelists.

**[Table 1]**

| Section | Temperature of seasoned minced fish before roasting | Surface temperature of seasoned minced fish during roasting | Time from exceeding 100 °C until the end of roasting | Crab flavor at the end of roasting | Occurrence of surface burning |
|---|---|---|---|---|---|
| NC2 | 25.5 | 170-260 | - | - | - |
| NC3 | 19.9 | 74 | - | Not flavored | Non-occurrence |
| NC4 | 19.6 | 75.5 | - | Not flavored | Non-occurrence |
| C | 36.1 | 110-120 | 90 | Flavored | Non-occurrence |
| D | 27.8 | 110-125 | 90 | Flavored | Non-occurrence |
| E | 33.3 | 115-125 | 60 | Flavored | Non-occurrence |
| F | 33.7 | 114-131 | 64 | Flavored | Non-occurrence |
| G | 36.5 | 114-160 | 60 | Flavored | Slightly expanded |
| H | 37.8 | 115-145 | 70 | Flavored | Non-occurrence |

Not only in NC2 without seasoned minced fish, but also in NC3 and 4 without roasting, no crab flavor was observed even after steam-heating. On the other hand, in all the sections C to H, a crab flavor was observed at the end of roasting and heating. The result in Table 1 shows that the optimum conditions for inducing the Maillard reaction are, as a roasting temperature, at least the surface temperature of seasoned minced fish in the range of 110-145 °C, at which the crab flavor is formed, and a roasting time of 60-90 seconds after the surface temperature exceeds 100 °C when the minced fish is at this surface temperature and in the form of a sheet with a thickness of 2 mm. When the surface temperature exceeds 150 °C, the surface of the seasoned minced fish will expand, and the generation of brown pigment will easily cause burning, resulting in a loss of crab flavor. In the section G, the roasting at a surface temperature of 160 °C probably resulted in slight expansion on the surface.

Further, it has been shown that in NC2 and NC3, the seasoned minced fish was easily broken during shredding after steam-heating, making it difficult to process and resulting in a reduction in yield. This is probably because the elasticity of the seasoned minced fish is decreased after heating. On the other hand, it has been shown that in all the sections C to H, the seasoned minced fish was less likely to be broken during the shredding process, maintaining a high yield. The roasting step probably decreases the moisture content to improve the elasticity of the surface of the seasoned minced fish, resulting in the seasoned minced fish that is less likely to be broken.

### [Example 4]

The flavor of the crustacean-flavored fish paste product according to the present invention was compared to that of snow crab meat and commercially available fish paste products containing crab extract. The flavor and appearance of thawed commercially available frozen snow crabs (reference), the section B prepared in Example 2, and commercially available crab boiled fish pastes containing crab extract (NC5 to NC8) were evaluated by four panelists in a blinded method. The flavor was rated on a five-point scale with 5 representing a flavor similar to snow crab, 4 representing a little snow crab flavor, 3 representing a slight snow crab flavor, 2 representing almost no snow crab flavor, and 5 representing no snow crab flavor at all. The appearance was rated on a five-point scale with 5 representing looking like snow crab, 4 representing looking a little like snow crab, 3 representing slightly looking like snow crab, 2 representing hardly looking like snow crab, and 5 representing not looking like snow crab at all. The result is shown in Table 2. The numerical numbers are based on the comprehensive evaluation by the panelists.

**[Table 2]**

| Section | Flavor | Appearance |
|---|---|---|
| Reference | 5 | 5 |
| Section B | 4 | 3 |
| NC5 | 2 | 2 |
| NC6 | 1 | 2 |
| NC7 | 2 | 4 |
| NC8 | 1 | 3 |

The result showed that the section B received the highest evaluation for flavor and had a flavor similar to crab meat, even though no crab extract or crab meat was added.

### [Example 5]

In order to verify that volatile components contributing to a crustacean flavor in the crustacean-flavored fish paste product according to the present invention are derived from the Maillard reaction, the product prepared in Example 2 was subjected to GC-MS analysis. A gas chromatograph mass spectrometry (7890B: Agilent Technologies) was used for the GC/MS analysis.

As in Example 2, three samples were subjected to analysis for each of the two types of section A (seasoned minced fish only) and section B (added crustacean-flavored seasoning described in Example 1 of 2 % by weight based on the seasoned minced fish). As a pretreatment for GC-MS analysis, each sample is shredded immediately before adsorption onto the SPME fiber, 0.5 g is weighed and put into a test bottle, and the headspace gas generated by heating at 80 °C was absorbed with a micro solid phase extraction device. The volatile components were analyzed qualitatively and quantitatively with the following method.

As a result of the analysis, three types of furans (Furan, 2-methyl-; Furan, 2,3-dihydro-5-methyl-; Furan, 2-ethyl-5-methyl-) and two types of pyrazines (Pyrazine; Pyrazine, trimethyl-), which were not detected in the section A, were detected in the section B. For alcohols (1-Penten-3-ol, 1-octen-3-ol) and aldehydes (Butanal 3-methyl-, Butanal 2-methyl-, Pentanal, Hexanal, Octanal), which are generally known to develop aromas in foods, no significant difference was identified between the two sections.

Furans and pyrazines, which were detected only in the section B, are compounds generated in the middle to late stages of the Maillard reaction, and are known to develop chocolate-like and popcorn-like aromas. The result strongly suggested that furans and pyrazines generated by inducing the Maillard reaction contribute to the development of the crustacean-like aroma by roasting the seasoned minced fish to which the crustacean-flavored seasoning described in Example 1 has been added.

### [Example 6]

The mixture of amino acids and starch in the crustacean-flavored seasoning, and the thickness of the sheet were varied to produce crab-flavored fish paste products and verify crab flavors.

### <Step 1>

Frozen minced fish (Walleye Pollack: containing sugar of 4.7 %, sorbitol of 2 %, and phosphate of 0.2 %: produced in Hokkaido) was coarsely ground with a silent cutter, and the salt of 2.1 % based on the minced fish was added for salt-grinding. When fish fiber became fine, water of 50 % based on the minced fish was added to prepare a paste-like seasoned minced fish. The crustacean-flavored seasonings with the following mixture examples were added to the resulting seasoned minced fish. In addition, in the following mixture examples 6-1 to 6-7 and 8-1, no starch was added, and in the mixture examples 7-1 and 7-2, starch of 2 % by weight and 5 % by weight were added to the minced fish, respectively.

(Mixture example 6-1) Methionine : Glycine : Arginine : Maltose = 1/36 : 0 : 2.5 : 1
(Mixture example 6-2) Methionine : Glycine : Arginine : Maltose = 1/32 : 3 : 2 : 1
(Mixture example 6-3) Methionine : Glycine : Arginine : Maltose = 1/24 : 3 : 3 : 1
(Mixture example 6-4) Methionine : Glycine : Arginine : Maltose = 1/32 : 1 : 2 : 1
(Mixture example 6-5) Methionine : Glycine : Arginine : Maltose = 1/24 : 3 : 2 : 1
(Mixture example 6-6) Methionine : Glycine : Arginine : Maltose = 1/32 : 1 : 2 : 0
(Mixture example 6-7) Methionine : Glycine : Arginine : Maltose = 0 : 0 : 0 : 0
(Mixture example 7-1) Methionine : Glycine : Arginine : Maltose = 1/32 : 1 : 2 : 1
(Mixture example 7-2) Methionine : Glycine : Arginine : Maltose = 1/32 : 1 : 2 : 1
(Mixture example 8-1) Methionine : Glycine : Arginine : Maltose = 1/32 : 1 : 2 : 1

### <Step 2>

On a conveyor belt, the seasoned minced fish to which the crustacean-flavored seasoning described above was added was formed into a sheet with a thickness of 2 mm in the mixture examples 6-1 to 6-7, 7-1, and 7-2, and was formed into a sheet with a thickness of 15 mm in the mixture example 8-1 and the width of the sheet was 125 mm in all the mixture examples. While the seasoned minced fish described above was conveyed, the surface thereof was roasted at 100-130 °C with an infrared burner (Rinnai Corporation) from both the upper and lower sides. The minced fish was conveyed at a rate where it can be roasted for about 56 seconds after the temperature of the minced fish exceeded 100 °C. During roasting, the surface temperature of the seasoned minced fish was measured at any time with a radiation thermometer (IR-302: Custom Corporation).

### <Step 3>

The seasoned minced fish roasted in the step 2 was rolled up and formed into a rod shape (for the mixture example 8-1, the minced fish was previously shaped into a rod shape, and no rolling-up was performed). Next, the seasoned minced fish sheet formed into a rod shape was steam-heated for 25 minutes to reach a temperature of 85 °C at the center. Furthermore, it was cooled for 30 minutes with an air cooler at 8 °C, cut into 30 mm pieces, vacuum packaged, and then sterilized by steam-heating (98 °C, 15 minutes × 2) to produce a crab-flavored fish paste product.

The produced crab-flavored fish paste product was subjected to a sensory test. The test was conducted by four trained panelists in a blinded method. As a result, the crab-flavored fish paste products produced using the mixture example 6-6 without the addition of maltose and the mixture example 6-7 without the addition of maltose and the crustacean-flavored seasoning smelled no crab-like aroma. On the other hand, all the crab-flavored fish paste products produced using the mixture examples 6-1 to 6-5 smelled a crab-like aroma. Further, the crab-flavored fish paste products produced using the mixture examples 6-1 to 6-5 had almost no visible browning at the surface, and smelled no burnt aroma at all.

The result revealed that roasting under predetermined conditions with a combination of two types of amino acids, methionine and arginine, and maltose, and a combination of three types of amino acids, methionine, glycine, and arginine, and maltose, as a crustacean-flavored seasoning can make a crab-flavored fish paste product that smells a crab-like aroma and prevents browning. Additionally, it has been shown that lactose was not used as described above, and a crab-flavored fish paste product that even those with lactose intolerance can safely eat could be produced.

The crab-flavored fish paste products produced using the mixture examples 7-1 and 7-2 also smelled a crab-like aroma. Comparing the mixture example 6-4 with starch content of 0 % by weight (no added), the mixture example 7-1 with starch content of 2 % by weight, and the mixture example 7-2 with starch content of 5% by weight, the crab-like aroma increases in proportion to the decrease in starch content. Accordingly, it has been shown that the starch content is preferably 2 % by weight or less to improve the crab-like aroma, and no starch is preferably added to further improve it.

Furthermore, the crab-flavored fish paste product produced from a sheet with a thickness of 15 mm using the mixture example 8-1 also smelled a crab-like aroma. In addition, it smelled the crab-like aroma not only at the surface but also at the center. Accordingly, it has been shown that this method of producing a crustacean-flavored fish paste product can make a fish paste product that has a crab-like aroma not only at the surface but also at the center, even when it is in the form of a sheet with a thickness of 15 mm.

As described above, the roasting time was 56 seconds after the surface temperature of the seasoned minced fish exceeded 100 °C, but the roasting time was further extended to examine the prevention of surface browning. The crab-flavored fish paste products produced using the mixture examples 6-1 to 6-5 (formed into a sheet with a thickness of 2 mm) were roasted for 100 seconds after the temperature of the surface of the seasoned minced fish exceeded 100 °C in the same manner as in the step 2 except for the roasting time. As a result, they began to partially expand 79 seconds after reaching a temperature of over 100 °C, and the whole area began to expand after 100 seconds. Accordingly, it has been shown that when a crab-flavored fish paste product is produced with a sheet having a thickness of 2 mm, the roasting time should be within 100 seconds, preferably within 80 seconds, from the viewpoint of preventing browning.

## Claims

1. A crustacean-flavored fish paste product which contains a compound obtained by mixing an amino acid with a disaccharide having a reducing sugar end to induce a Maillard reaction and is made mainly from minced fish, the product **characterized in that**:
the compound is obtained through a step (a) of preparing amino acid-disaccharide-added minced fish to which at least two types of amino acids selected from methionine, glycine, and arginine, and a disaccharide having a reducing sugar end are added, and a step (b) of roasting a surface of the amino acid-disaccharide-added minced fish so that the surface reaches temperatures of 80-145 °C.

2. The crustacean-flavored fish paste product according to claim 1, **characterized in that**
the disaccharide having a reducing sugar end is maltose.

3. The crustacean-flavored fish paste product according to claim 1, **characterized in that**
in the step (b), the surface of the amino acid-disaccharide-added minced fish is roasted to reach temperatures of 100-145 °C.

4. The crustacean-flavored fish paste product according to claim 1, **characterized in that**
in the step (a), the prepared amino acid-disaccharide-added minced fish is formed into a sheet.

5. The crustacean-flavored fish paste product according to claim 1, **characterized in that**
a step (c) of steam-heating the minced fish roasted in the step (b) for about 15-30 minutes so that the center of the minced fish reaches temperatures of 85-90 °C is included.

6. The crustacean-flavored fish paste product according to claim 1, **characterized in that**
the amino acid added in the step (a) includes arginine, and a molar ratio of arginine to the disaccharide having a reducing sugar end is 1.3-5.

7. The crustacean-flavored fish paste product according to claim 1, **characterized in that**
the amino acid added in the step (a) includes methionine, and a molar ratio of methionine to the disaccharide having a reducing sugar end is 1/48-1/12.

8. The crustacean-flavored fish paste product according to claim 1, **characterized in that**
the amino acid added in the step (a) includes two types of amino acids, methionine and arginine.

9. The crustacean-flavored fish paste product according to claim 1, **characterized in that**
no crab extract or crab meat, or processed products thereof are added.

10. A method of producing a crustacean-flavored fish paste product which contains a compound obtained by mixing an amino acid with a disaccharide having a reducing sugar end to induce a Maillard reaction and is made mainly from minced fish, the method comprising
a step (a) of preparing amino acid-disaccharide-added minced fish to which at least two types of amino acids selected from methionine, glycine, and arginine, and a disaccharide having a reducing sugar end are added, and
a step (b) of roasting a surface of the amino acid-disaccharide-added minced fish so that the surface reaches temperatures of 80-140 °C.

11. The method of producing a crustacean-flavored fish paste product according to claim 10, **characterized in that**
the disaccharide having a reducing sugar end is maltose.

12. The method of producing a crustacean-flavored fish paste product according to claim 10, **characterized in that**
in the step (b), the surface of the amino acid-disaccharide-added minced fish is roasted to reach temperatures of 100-140 °C.

13. The method of producing a crustacean-flavored fish paste product according to claim 10, **characterized in that**
in the step (a), the prepared amino acid-disaccharide-added minced fish is formed into a sheet.

14. The method of producing a crustacean-flavored fish paste product according to claim 13, **characterized in that**
in the step (b), the amino acid-disaccharide-added minced fish formed into a sheet is placed on a belt conveyor, and while the belt conveyor is moved, the surface of the minced fish is roasted to reach temperatures of 80-140 °C.

15. The method of producing a crustacean-flavored fish paste product according to claim 14, **characterized in that**
in the step (b), the amino acid-disaccharide-added minced fish formed into a sheet with a thickness of 1.5-3.0 mm is placed on a belt conveyor, and while the belt conveyor is moved, the surface of the minced fish is roasted for 50-100 seconds after reaching a temperature of over 100 °C.

16. The method of producing a crustacean-flavored fish paste product according to claim 10, **characterized by** comprising
a step (c) of steam-heating the minced fish roasted in the step (b) for about 15-30 minutes so that the center of the minced fish reaches temperatures of 85-90 °C.

17. The method of producing a crustacean-flavored fish paste product according to claim 10, **characterized in that**
the amino acid added in the step (a) includes arginine, and a molar ratio of arginine to the disaccharide having a reducing sugar end is 1.3-5.

18. The method of producing a crustacean-flavored fish paste product according to claim 10, **characterized in that**
the amino acid added in the step (a) includes methionine, and a molar ratio of methionine to the disaccharide having a reducing sugar end is 1/48-1/12.

19. The method of producing a crustacean-flavored fish paste product according to claim 10, **characterized in that**
the amino acid added in the step (a) includes two types of amino acids, methionine and arginine.

20. The method of producing a crustacean-flavored fish paste product according to claim 10, **characterized in that**
no crab extract or crab meat, or processed products thereof are added.
